# FASCICULE DE BREVET EUROPEEN

(11) **EP 2 155 504 B1**
(45) Date de publication et mention de la délivrance du brevet: **12.07.2017**
(21) Numéro de dépôt: 08758723.4
(22) Date de dépôt: 23.05.2008
(51) Int. Cl.: B44C 3/02, B44C 5/04, B05D 5/00, D21H 27/20, B05D 3/06, B05D 5/06, B05D 7/02, B05D 7/00, B32B 27/12, D06N 3/08

(54) **ELEMENT DE DECORATION**
VERZIERUNGSELEMENT
DECORATION ELEMENT

(30) Priorité: 25.05.2007 EP 07010462
(43) Date de publication de la demande: 24.02.2010
(73) Titulaire: Tarkett SAS, 92478 Nanterre Cedex (FR)
(72) Inventeur: GEORGES, Jean-Philippe, B-6637 Fauvillers (BE)
(74) Mandataire: Van Malderen, Joëlle
(86) Numéro de dépôt international: PCT/EP2008/004128
(87) Numéro de publication internationale: WO 2008/145306

(56) Documents cités:
- WO-A-03/057458
- US-A- 4 176 210
- US-A1- 2004 071 978
- US-A1- 2004 115 350
- US-B1- 6 444 134

## Description

### Objet de l'invention

La présente invention propose une solution au problème de la décoration de surfaces, une solution qui comprend un revêtement de surface à peindre et au moins une peinture. L'invention se rapporte également à un revêtement de surface peint, ainsi qu'à un procédé de décoration de surfaces.

### Etat de la technique

Habituellement, la décoration extérieure ou intérieure d'une construction, d'un édifice par exemple, se fait classiquement à l'aide d'une peinture. Généralement, l'emploi d'une peinture nécessite la pose préalable d'une couche d'enduit, communément appelée « primaire », qui a pour but d'aplanir et de matifier le support, et, une fois que cet enduit est sec, cela nécessite ensuite la pose de plusieurs couches de peinture afin d'obtenir un bon rendu esthétique.

Selon les circonstances, pour les sols en particulier, il s'avère plus agréable, plus esthétique, et plus confortable, de décorer une surface à l'aide d'un revêtement, en particulier si l'on compare les avantages d'un revêtement de surface par rapport à une surface nue et simplement peinte.

Parmi les revêtements de surface, et pour la décoration intérieure, d'un bâtiment par exemple, d'une habitation ou d'habitacles de véhicules, les revêtements plastiques sont très courants. C'est le cas notamment des revêtements de surface en PVC (polychlorure de vinyle). D'une manière générale, ces revêtements de surface en PVC sont des produits multicouches qui comprennent d'une part une couche inférieure dite couche substrat, ou couche de support et d'autre part une couche supérieure en PVC. La couche de support peut être compacte, moussée ou textile. Dans le cas d'une couche de support moussée, il peut s'agir par exemple de mousse de PVC. Cette couche de support peut comprendre ou non des charges minérales. La couche supérieure est, quant à elle, à base de PVC et présente une bonne résistance aux agressions mécaniques et chimiques qui surviennent dans les conditions normales d'utilisation de tels revêtements de surface. Habituellement, la couche supérieure en PVC est revêtue d'un vernis de protection pour renforcer la résistance à l'usure par abrasion du revêtement et qui permet au revêtement d'avoir des propriétés antitache et antisalissure.

De tels revêtements, communément appelés « revêtements PVC », présentent de nombreux avantages, notamment en matière de confort et de souplesse par exemple, néanmoins ils présentent également de nombreux inconvénients, notamment l'inconvénient de n'être disponible que dans certains coloris, et/ou de ne comprendre que les motifs décoratifs proposés par le fabriquant de tels produits. De surcroit, généralement, ces revêtements se présentent sous la forme de larges rouleaux qui ne sont pas faciles à manipuler et à mettre en oeuvre. De plus, s'agissant de revêtements décorés d'un motif, il est bien souvent très difficile de positionner le motif décoratif d'un rouleau de revêtements par rapport à un autre afin d'avoir le bon raccord. Par ailleurs, la présence des cordons de soudure entre rouleaux nuit à l'esthétique finale du revêtement posé.

De plus, une personne désirant décorer une surface à l'aide d'un revêtement PVC en ayant la liberté du choix du motif décoratif et/ou de la couleur ne peut pas re-décorer ou modifier la couleur d'un revêtement PVC existant en le peignant car les peintures proposées classiquement ne conviennent pas à tous les revêtements. En effet, peindre une surface en PVC n'est pas chose aisée du fait de problèmes d'adhérence entre peinture et revêtement. Etant polaire et ayant une tension de surface se situant entre 28 et 40 mN/m et une faible porosité, comparé à des revêtements de surface traditionnels, ces revêtements PVC sont peu adaptés à recevoir des peintures. De plus, généralement ces revêtements PVC sont recouverts d'un vernis de protection acrylique ou en polyuréthane, en polyéther acrylate ou époxy-acrylate par exemple, qui leur confère des propriétés antisalissure et antitache.

Il convient également de tenir compte du fait que le revêtement PVC une fois peint doit présenter les mêmes caractéristiques et le même comportement, notamment en terme de confort, de souplesse et de résistance mécanique, que celles du revêtement non peint. D'autre part, la peinture une fois sèche ne doit pas être trop rigide et doit permettre de suivre les mouvements et déformations du revêtement, faute de quoi des craquelures et des fissures peuvent apparaître compromettant ainsi l'intégrité du revêtement. De plus, pour des raisons de praticité, la peinture doit posséder un effet couvrant suffisant dès l'application d'une seule couche de peinture.

US-A-2004/0071978 décrit un revêtement de surface comprenant une couche de substrat (qui peut être du PVC mais aussi un autre matériau), une couche imprimée avec un dessin, une couche de couverture transparente, réalisée de préférence avec le même matériau que la couche de substrat. La couche supérieure est une couche résistante aux taches et aux griffes, formée d'un copolymère polyuréthane acrylate réticulable par irradiation. Cette couche supérieure n'est manifestement pas destinée à être peinte, vu que la couche imprimée sous-jacente doit rester visible.

US-A-4,176,210 décrit un revêtement multicouches comprenant dans l'exécution de l'exemple 1, sur une couche de mousse PVC, une couche d'usure de PVC fondu et une couche de polyuréthane réticulé. Une mise en peinture n'est pas mentionnée.

WO-A-03/057458 décrit un revêtement de surface embossé et son procédé de fabrication très spécifique. Une mise en peinture n'est pas non plus mentionnée.

### Buts de l'invention

La présente invention propose une solution pour la décoration de surface qui ne présente pas les inconvénients de l'état de la technique.

Elle vise en particulier à fournir une solution pour la décoration de surface impliquant la pose d'un revêtement décoratif dit « à poser soi-même » qui est de mise en oeuvre aisée.

Elle vise également à fournir une solution pour la décoration de surface dans laquelle la couleur et/ou le motif de décoration ne sont pas imposés.

Elle vise en outre à fournir, une solution pour la décoration de surface dans laquelle une seule couche de peinture est nécessaire afin d'avoir une opacité suffisante et une résistance mécanique.

Elle vise de plus à fournir un procédé de décoration de surface qui ne présente pas les inconvénients de l'état de la technique.

### Résumé de l'invention

La présente invention décrit un kit de décoration de surface comprenant un revêtement de surface à peindre, ledit revêtement étant à base de PVC et recouvert d'un vernis de protection à base d'un polymère polyuréthane réticulable par UV, et un récipient contenant une peinture à base d'uréthane-acrylique.

Le terme « kit de décoration » désigne un ensemble d'éléments indépendants permettant de décorer soi-même une surface quelconque.

Le terme « surface » désigne toute surface, qu'elle soit intérieure ou extérieure, verticale ou horizontale. Sans être limitatif, il peut s'agir par exemple de la surface d'un bâtiment, d'une habitation ou d'un véhicule, ou tout simplement désigne la surface du sol. Il peut également s'agir de la surface de n'importe quel corps ou objet.

Selon des formes particulières de réalisation, le kit de décoration comporte l'une ou plusieurs des caractéristiques suivantes :
- le revêtement de surface est un produit multicouche comprenant une couche de support moussée ou compacte ou textile et une couche supérieure à base de PVC.
- le revêtement de surface est sous la forme de dalles ou d'au moins un rouleau.
- le kit de décoration comprend en outre des moyens pour appliquer la peinture sur le revêtement de surface.
- le kit de décoration comprend en outre des moyens de pose du revêtement de surface et/ou des moyens de soudure dudit revêtement de surface.
- le kit de décoration comprend en outre au moins un pochoir et/ou un film à pochoir.
- le kit de décoration comprend en outre un mode d'emploi.

La présente invention divulgue également un revêtement de surface caractérisé en ce que ledit revêtement de surface est un revêtement de surface à peindre, à base de PVC, et recouvert d'un vernis, à base de polymère polyuréthane réticulable par UV, et en ce qu'au moins une peinture à base d'uréthane-acrylique est appliquée sur ledit vernis.

Selon une forme particulière de réalisation, le revêtement de surface est un produit multicouche comprenant une couche de support moussée ou compacte ou textile et une couche supérieure à base de PVC.

La présente invention divulgue par ailleurs un procédé de décoration d'une surface comprenant les étapes suivantes :
- prendre un revêtement de surface à base de PVC recouvert d'un vernis à base de polymère polyuréthane réticulable par UV.
- poser ledit revêtement sur une surface.
- prendre une peinture à base d'uréthane-acrylique.
- appliquer ladite peinture sur ledit revêtement de surface.

Selon des formes particulières de réalisation, le procédé de décoration comporte l'une ou plusieurs des caractéristiques suivantes :
- le revêtement de surface est un produit multicouche comprenant une couche de support moussée ou compacte ou textile et une couche supérieure à base de PVC.
- le vernis de protection est obtenu par réticulation UV d'un polymère polyuréthane réticulable par UV.
- le revêtement de surface est sous la forme de dalles ou de rouleaux.
- les dalles ou rouleaux sont disposés bord à bord sur la surface à décorer et sont joints par une soudure à froid.
- le revêtement de surface est décoré à l'aide de la peinture à base d'uréthane-acrylique en utilisant au moins un pochoir.

### Brève description des figures

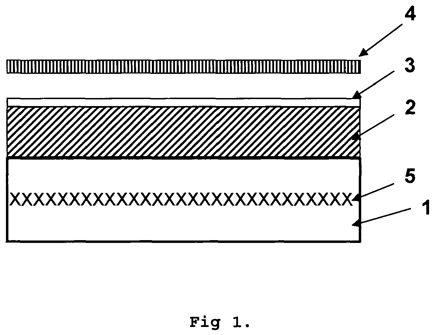

La figure 1 représente une coupe transversale d'un revêtement de surface.

### Description détaillée de l'invention

Le kit de décoration selon l'invention présente l'avantage de combiner les avantages d'un revêtement de surface à base de PVC recouvert d'un vernis de protection, notamment en terme de confort, de souplesse, d'isolation phonique et thermique et de résistance mécanique, avec la possibilité de le peindre facilement, en n'appliquant qu'une seule couche de peinture, avec une liberté de choix infini de couleur, nuances, ou motifs décoratifs. De plus, une fois peint, le revêtement présente l'avantage de posséder des propriétés de résistance aux agressions physiques et aux taches sans qu'une nouvelle couche de vernis doive recouvrir la peinture.

Le kit de décoration selon l'invention est un kit dans lequel le revêtement de surface est à mettre en place soi-même. Il se présente, par exemple, sous la forme de petits rouleaux, de préférence de 1 à 2 mètres de large, ou sous la forme de carreaux, ou dalles, de 50 cm par 50 cm, ou de 33 cm par 33 cm, faciles à transporter et faciles à poser. De préférence, le revêtement peut être de couleur blanche et peut avoir un aspect granulé, mais il ne comporte pas de motifs décoratifs, ce qui simplifie sa pose car le revêtement peut être disposé bord à bord sans devoir respecter un éventuel raccord de motif.

Le revêtement de surface du kit est de préférence un produit multicouche comprenant une couche de support, d'une couche supérieure qui peut éventuellement servir de couche d'usure, et d'un vernis de protection.

La couche de support peut être une couche compacte, ou moussée, ou textile. De préférence, elle possède une épaisseur de 0,7 à 5 mm. Avantageusement, elle est obtenue par lamination ou calandrage.

De préférence, la couche supérieure est une couche à base de PVC. Son épaisseur est avantageusement de 0,1 à 1 mm d'épaisseur, mais peut varier en fonction des applications auxquelles le revêtement multicouche est destiné. De préférence, la couche supérieure est transparente.

De préférence, la couche supérieure à base de PVC comprend des plastifiants de la famille des phtalates, par exemple du DIBP (Di-isobutylphthalate), DIHP (Diisoheptylphthalate) ou DINP (Di-isononylphthalate), et représentent en poids de préférence entre 30 et 60% du poids total de la résine.

De préférence, la couche de support et/ou la couche supérieure du revêtement de surface peut comprendre des charges minérales destinées à lui conférer des propriétés mécaniques particulières. Il peut s'agir par exemple de carbonate de calcium, de caolin, de talc, ou d'un voile de verre.

De préférence, la couche de support et/ou la couche supérieure peuvent contenir un ou plusieurs additifs permettant par exemple d'abaisser la viscosité des compositions utilisées pour confectionner les couches ou permettant de modifier les propriétés mécaniques du revêtement de surface final.

Dans une forme de réalisation particulière, le kit de décoration comprend un revêtement de surface multicouche d'environ 2,83 mm d'épaisseur, la couche de support à base de PVC moussable ayant 0,432 mm d'épaisseur, la couche supérieure en PVC ayant 0,120 mm d'épaisseur et le vernis de protection ayant 0,008 mm d'épaisseur.

La peinture, à appliquer sur le revêtement de surface à peindre, doit, en autre, adhérer au revêtement, avoir une mouillabilité suffisante, et un aspect uniforme, dès l'application de la première couche, et doit être suffisamment élastique afin de pouvoir suivre la déformation du revêtement sur lequel elle est appliquée.

L'aspect uniforme ou l'opacité est jugé comme suffisant s'il n'est pas possible de distinguer la couleur initiale de la surface qui a été recouverte par la peinture, et si l'aspect visuel et la couleur de la surface peinte sont homogènes.

Différentes peintures murales ou de sol existent dans différents coloris (tableau 1), comme par exemple les peintures acryliques, alkyde-uréthane, polyuréthane-alkyde, ou bien encore uréthane acrylique, mais parmi toutes ces peintures, toutes ne se révèlent pas adéquates pour décorer un revêtement de surface à base de PVC. Certaines de ces peintures présentent une opacité, après l'application d'une seule couche de peinture, qui est insuffisante pour répondre aux critères de praticité d'un kit de décoration.

**Tableau 1 : Peintures testées.**

| | Peinture | Type de liant | Opacité en une couche |
|---|---|---|---|
| 1 | Polyfilla Hammerite rouge (laque satinée) | Alkyde | Insuffisante |
| 2 | Polyfilla Hammerite garage bleu (laque) | Styrène-alkyde | Bonne |
| 3 | Gerard Secolux Email Lilas bleu satin | PU-alkyde | Bonne |
| 4 | Gerard Geralac Email Lack Brillant 6005 vert | Acrylique | Insuffisante |
| 5 | Opus 1 Wohnraumwiess (murale) | Acrylique | Insuffisante |
| 6 | Zero PUR-Lack HP (2 composants) (sol) | Bi-composant Acrylate/ isocyanate | Bonne |
| 7 | Caparol Indeko Plus Lapis 13 (murale) | Acrylique | Bonne |
| 8 | Caparol PU-Alkyd Satin Agave 145 (murale) | PU-alkyde | Bonne |
| 9 | Caparol Hochglanz-Buntlack Verona 140 | Alkyde | Bonne |
| 10 | Caparol Capacryl PU Vorlack Cameo 180 (murale) | PU-acrylique | Insuffisante |
| 11 | **Caparol** Vorlack Patina 105 (murale) | Alkyde | Bonne |
| 12 | **Levis** Laque Satin vert empire 5834 (murale) | Alkyduréthane | Bonne |
| 13 | **Levis** Levilux Gris perle | Alkyde | Bonne |
| 14 | **Levis** Floor Regular vert tendre 5516 (sol) | Uréthane-acrylique | Bonne |
| 15 | **Caporal** Capatrend Marill 125 (murale) | Polyvinyl acetate | Insuffisante |
| 16 | **Caporal** Capatrend Bordeaux 65 (murale) | Polyvinyl acetate | Insuffisante |
| 17 | **Caporal** Capacryl PU Vorlack Saphirblau (murale) | Pu-acrylique | Insuffisante |

Il est généralement admis qu'appliquer une peinture sur une couche superficielle de protection (ou vernis de protection) à base d'acrylique ou de polyuréthane par exemple, une couche sur laquelle peu de choses adhèrent, est très difficile. C'est pourquoi, l'adhérence des différentes peintures sur la couche supérieure d'un revêtement de surface à base de PVC, sans vernis de protection, a été testée. Comme le montre le tableau 2, des peintures polyuréthane-alkydes, acryliques ou uréthane-acryliques adhérent à la couche supérieure à base de PVC, c'est le cas des peintures n°4, n°9, n°10, n°14 ; néanmoins, les peintures n°4 et n°10 ne sont pas adéquates car elles ont un effet de couverture médiocre après l'application d'une seule couche et présentent une mouillabilité insuffisante.

Malgré l'idée préconçue selon laquelle il est difficile d'appliquer une peintre sur des vernis de protection à base d'acrylique ou de polyuréthane, différentes peintures ont été testés afin de déterminer quelles étaient les peintures présentant une bonne adhérence pour ces vernis.

**Tableau 2 : Adhérence des différentes peintures testées.**

| Couche superficielle | Type | Adhérence avec les peintures |
|---|---|---|
| Aucune | | 4, 9, 10, 14 |
| **Gerard** Geralac primaire blanc | Acrylique | 1, 4, 8, 10 |
| **Gerard** Primodur LM | Acrylique | aucune |
| **Caparol** Haft Primer Satin Saphir 120 | Acrylique | 4, 8, 10 |
| **Tarkett** Anti 5-58 | Acrylique | 1, 4, 6, 7, 8, 10, 16 |
| **Tarkett** PUTR | Polyuréthane réticulable par UV | 6, 14 |

Comme le montre le tableau 2, à part pour le vernis acrylique Gerard Primodur pour lequel aucune des peintures testées n'adhère, les différents vernis permettent à différentes peintures d'adhérer au revêtement. Cependant, parmi ces peintures, seules les peintures n°6, n°7, n°8, n°14 ont un aspect uniforme suffisant en une seule application.

Afin de déterminer quelles étaient les combinaisons vernis/peinture qui permettaient d'obtenir un revêtement PVC peint présentant les meilleures propriétés, la résistance aux salissures et la résistance au trafic, des revêtements PVC comprenant les différents vernis peints, ont été évaluées.

Le test de résistance aux salissures consiste à déposer sur un échantillon de revêtement une dizaine de taches représentatives et juger de la facilité avec laquelle il est possible de les nettoyer à l'aide d'un chiffon sec, ou à l'aide d'un chiffon humidifié avec de l'eau ou de l'alcool.

Le test de résistance au trafic consiste à recouvrir le sol d'un lieu présentant un trafic intense (de type industriel moyen) à l'aide d'un échantillon des revêtements peints, d'une dimension de 50 x 50 cm par exemple, et de relever, au bout d'un certain temps, l'aspect visuel de la peinture, son niveau de salissure, son aspect collant, et sa facilité de nettoyage. L'aspect visuel de la peinture est jugé par son niveau de couverture, son niveau de salissure par la quantité de taches présentes, son aspect collant par un test d'empoussièrage suivi d'un nettoyage à l'eau.

Soumis à un trafic intense, il est apparu, de façon surprenante, que tous les revêtements, comprenant un vernis peint, ne résistent pas aux agressions mécaniques et aux taches de la même manière dans le temps. En particulier, les revêtements recouverts d'un vernis acrylique peint résistent moins bien aux taches et à la salissure que des revêtements recouverts d'un vernis PUTR peint. Rapidement, les revêtements recouverts d'un vernis acrylique se salissent, la peinture devient collante, et le nettoyage devient difficile.

Seules les associations PUTR/peinture n°6 et PUTR/peinture n°14 présentent une résistance supérieure au cours du temps. Or la peinture n°14 est une peinture bi-composant qui n'est pas facile à mettre en oeuvre et qui présente l'inconvénient d'être potentiellement toxique lors de sa manipulation. Ainsi donc, seule la peinture n°6, une peinture uréthane-acrylique, se révèle appropriée pour peindre un revêtement PVC recouvert d'un vernis de protection en polyuréthane réticulable par UV, car elle présente l'avantage d'adhérer au vernis tout en ayant une élasticité lui permettant de suivre la déformation du revêtement, et elle permet au revêtement de conserver dans le temps ses caractéristiques de résistance à l'usure et aux salissures. En particulier, dans un test de poinçonnement, il apparait que la peinture ne dégrade pas les performances du revêtement ; en effet, la résistance au poinçonnement d'un revêtement PVC dont le vernis polyuréthane est peint est de 82 ± 5 N alors qu'elle est de 79 ± 5 N pour ce même revêtement dont le vernis polyuréthane n'est pas peint (tableau 3)

**Tableau 3 : Résistance au poinçonnement.**

| Revêtement PVC | Valeurs en Newton | Moyenne/Ecart-type |
|---|---|---|
| Vernis de protection avec peinture | 89,5 ; 81,8 ; 82,3 ; 79,9 ; 82,6 ; 79,6 ; 72,6 ; 87,3 ; 86,3 ; 81,2 | 82 ± 5 N |
| Vernis de protection sans peinture | 79,0 ; 74,3 ; 82,6 ; 73,7 ; 81,4 ; 77,1 ; 85,9 ; 75,7 ; 85,1 ; 75,0 | 79 ± 5 N |

Cette résistance accrue au trafic obtenue par l'utilisation d'un vernis PUTR semble résider dans le fait que ce vernis en polyuréthane empêche les plastifiants de la couche supérieure, qui ont pour fonction de l'assouplir, de remonter à la surface et de passer dans la peinture. Dans un revêtement recouvert d'un vernis acrylique peint, les plastifiants traversent le vernis acrylique, passent dans la couche de peinture, la dégradent et altèrent, non seulement les propriétés de la peinture, mais également celles du revêtement. La peinture, rendue collante par les plastifiants, piège la poussière et les salissures, ce qui rend le revêtement plus sensible aux salissures.

De préférence, avant son application sur la couche supérieure du revêtement, la composition de polyuréthane réticulable par UV, qui formera le vernis de protection, se présente sous la forme d'une émulsion aqueuse. Cette composition est déposée sur la couche supérieure par tout moyen adéquat, de préférence par enduction ou impression. Une fois, la composition de polyuréthane déposée, le vernis de protection est formé par la réticulation de la composition de polyuréthane, une réticulation qui est effectuée en soumettant la composition à des radiations UV, pendant par exemple 10 à 30 secondes dans un four UV d'une puissance de 900mjoules/cm² par exemple.

Pour un vernis de protection en polyuréthane à base d'acrylique et de polycarbonate (dans une proportion de 1/1), réticulé thermiquement, par exemple à 160°C par contact avec un tambour chauffant, les peintures n°6 et n°14, qui présentent la meilleure adhérence sur le vernis à base de polyuréthane réticulable par UV, présentent une mauvaise adhérence au vernis polyuréthane réticulé thermiquement.

Dans une forme de réalisation particulière, le vernis est déposé sur la couche supérieure après que le revêtement ait été posé sur la surface à décorer. Néanmoins, dans une autre forme de réalisation particulière, le vernis est déposé sur la couche supérieure lors de la fabrication du revêtement de surface, ce qui représente un gain de temps pour l'utilisateur du kit de décoration selon l'invention.

De préférence, le kit de décoration selon l'invention comprend au moins un récipient contenant une peinture uréthane-acryliques. De préférence, le kit contient plusieurs récipients de peintures de différentes couleurs afin d'offrir le plus grand choix possible. L'utilisateur du kit peut utiliser une seule peinture d'une seule teinte ou bien mélanger les différentes couleurs présentes dans le kit.

La peinture uréthane-acrylique est appliquée par tout moyen adéquat, de préférence au pinceau ou à l'aérosol.

De préférence, le kit de décoration selon l'invention comprend des moyens pour appliquer la peinture du kit, avantageusement, le kit comprend au moins un pinceau.

De préférence, le kit de décoration selon l'invention comprend des moyens de pose du revêtement et/ou des moyens de soudure à froid.

De préférence, les moyens de pose du revêtement comprennent des moyens de découpe du revêtement, et des moyens pour fixer le revêtement au sol.

Avantageusement les moyens de découpe du revêtement comprennent un couteau ou un cutter.

Avantageusement les moyens pour fixer le revêtement au sol comprennent un adhésif, de la colle, ou un primaire d'accrochage.

La pose d'un revêtement de surface sous forme de rouleaux ou de dalles nécessite de les disposer bord à bord et d'effectuer une soudure entre les rouleaux ou les dalles afin d'obtenir une belle finition. Cette soudure est effectuée de manière conventionnelle, par tout moyen adéquat. De préférence, il s'agit d'une soudure à froid.

De préférence, les moyens de soudure à froid comprennent un flacon contenant un solvant permettant l'élaboration des joints, du papier cache lisse, un couteau à molette pour découper le papier cache.

De préférence, le solvant pour souder les lés ou dalles de revêtement PVC est du THF (tetrahydrofurane).

De préférence, le kit de décoration selon l'invention comprend en outre au moins un pochoir permettant à l'utilisateur du kit de décorer le revêtement de surface de motifs divers et variés. Avantageusement, le kit comprend un film à pochoir, par exemple en PVC transparent ou acétate cristal, afin de permettre à l'utilisateur du kit de reproduire lui-même les motifs qu'il aura choisi.

### LEGENDE

- 1 :: couche de support
- 2 :: couche supérieure
- 3 :: vernis de protection
- 4 :: couche de peinture
- 5 :: voile de verre

## Revendications

1. Kit de décoration de surface comprenant un revêtement de surface à base de PVC à poser sur la surface à décorer, **caractérisé en ce que** :
ledit revêtement à base de PVC est un revêtement de surface à peindre dont la surface à peindre est recouverte d'un vernis (3) obtenu par réticulation UV d'un polymère polyuréthane réticulable par UV ; et
le kit comprend en outre un récipient contenant une peinture à base d'uréthane-acrylique à appliquer sur le vernis (3) de la surface à peindre, après avoir posé le revêtement de surface sur la surface à décorer.

2. Kit de décoration selon la revendication 1 dans lequel le revêtement de surface est un produit multicouche comprenant une couche de support (1) moussée ou compacte ou textile et une couche supérieure (2) à base de PVC.

3. Kit de décoration selon l'une quelconque des revendications précédentes dans lequel le revêtement de surface est sous la forme de dalles ou d'au moins un rouleau.

4. Kit de décoration selon l'une quelconque des revendications précédentes comprenant en outre des moyens pour appliquer la peinture sur le revêtement de surface.

5. Kit de décoration selon l'une quelconque des revendications précédentes comprenant en outre des moyens de pose du revêtement de surface et/ou des moyens de soudure dudit revêtement de surface.

6. Kit de décoration selon l'une quelconque des revendications précédentes comprenant en outre au moins un pochoir et/ou un film à pochoir.

7. Kit de décoration selon l'une quelconque des revendications précédentes comprenant en outre un mode d'emploi.

8. Décoration de surface comprenant un revêtement de surface à base de PVC posé sur la surface à décorer, **caractérisé en ce que** ledit revêtement de surface est un revêtement à peindre dont la surface à peindre est recouverte d'un vernis (3) obtenu par réticulation UV d'un polymère polyuréthane réticulable par UV, et **en ce qu'**au moins une peinture à base d'uréthane-acrylique a été appliquée sur ledit vernis (3) après avoir posé le revêtement de surface à base de PVC sur la surface à décorer.

9. Revêtement de surface selon la revendication 8 dans lequel ledit revêtement de surface est un produit multicouche comprenant une couche de support (1) moussée ou compacte ou textile et une couche supérieure (2) à base de PVC.

10. Procédé de décoration d'une surface **caractérisé par** les étapes suivantes :
- prendre un revêtement de surface à peindre à base de PVC, dont la surface à peindre est recouverte d'un vernis (3) obtenu par réticulation UV d'un polymère polyuréthane réticulable par UV ;
- poser ledit revêtement sur la surface à décorer ;
- prendre une peinture à base d'uréthane-acrylique ; et
- appliquer ladite peinture sur ledit vernis (3) du revêtement de surface.

11. Procédé de décoration de surface selon la revendication 10 dans lequel ledit revêtement de surface est un produit multicouche comprenant une couche de support
(1) moussée ou compacte ou textile et une couche supérieure
(2) à base de PVC.

12. Procédé selon l'une quelconque des revendications 10 à 12 dans lequel le revêtement de surface est sous la forme de dalles ou de rouleaux.

13. Procédé selon l'une quelconque des revendications 10 à 13 dans lequel les dalles ou rouleaux sont disposés bord à bord sur la surface à décorer et sont joints par une soudure à froid.

14. Procédé selon l'une quelconque des revendications 10 à 14 dans lequel le revêtement de surface est décoré à l'aide de la peinture à base d'uréthane-acrylique en utilisant au moins un pochoir.

## Patentansprüche

1. Set zur Oberflächenverzierung, das einen Oberflächenbelag auf Basis von PVC zum Verlegen auf die zu verzierende Oberfläche umfasst, **dadurch gekennzeichnet, dass**:
der Belag auf Basis von PVC ein zu streichender Oberflächenbelag ist, dessen zu streichende Oberfläche mit einem Lack (3) bedeckt ist, der durch UV-Vernetzung eines durch UV vernetzbaren Polyurethanpolymers erhalten wird; und
das Set ferner ein Behältnis umfasst, das ein Urethan-Acryl-Anstrichmittel enthält, das auf den Lack (3) der zu streichenden Oberfläche aufgetragen werden soll, nachdem der Oberflächenbelag auf der zu verzierenden Oberfläche verlegt wurde.

2. Verzierungsset nach Anspruch 1, wobei der Oberflächenbelag ein mehrlagiges Produkt ist, das eine geschäumte oder kompakte oder textile Trägerschicht (1) sowie eine Deckschicht (2) auf Basis von PVC umfasst.

3. Verzierungsset nach einem der vorhergehenden Ansprüche, wobei der Oberflächenbelag in Form von Platten oder von mindestens einer Rolle vorliegt.

4. Verzierungsset nach einem der vorhergehenden Ansprüche, das ferner Mittel zum Auftragen des Anstrichmittels auf dem Oberflächenbelag umfasst.

5. Verzierungsset nach einem der vorhergehenden Ansprüche, das ferner Mittel zum Verlegen des Oberflächenbelags und/oder Mittel zum Verschweißen des Oberflächenbelags umfasst.

6. Verzierungsset nach einem der vorhergehenden Ansprüche, das ferner mindestens eine Schablone und/oder eine Schablonenfolie umfasst.

7. Verzierungsset nach einem der vorhergehenden Ansprüche, das ferner eine Bedienungsanleitung umfasst.

8. Oberflächenverzierung, die einen Oberflächenbelag auf Basis von PVC umfasst, der auf der zu verzierenden Oberfläche verlegt ist, **dadurch gekennzeichnet, dass** der Oberflächenbelag ein zu streichender Belag ist, dessen zu streichende Oberfläche mit einem Lack (3) bedeckt ist, der durch UV-Vernetzung eines UVvernetzbaren Polyurethanpolymers erhalten wird, und dadurch, dass mindestens ein Urethan-Acryl-Anstrichmittel auf dem Lack (3) aufgetragen wurde, nachdem der Oberflächenbelag auf Basis von PVC auf der zu verzierenden Oberfläche verlegt wurde.

9. Oberflächenbelag nach Anspruch 8, wobei der Oberflächenbelag ein mehrlagiges Produkt ist, das eine geschäumte oder kompakte oder textile Trägerschicht (1) sowie eine Deckschicht (2) auf Basis von PVC umfasst.

10. Verfahren zum Verzieren einer Oberfläche, das durch folgende Schritte gekennzeichnet ist:
- Verwenden eines zu streichenden Oberflächenbelags auf Basis von PVC, dessen zu streichende Oberfläche mit einem Lack (3) bedeckt ist, der durch UV-Vernetzung eines durch UV vernetzbaren Polyurethanpolymers erhalten wird;
- Verlegen des Belags auf der zu verzierenden Oberfläche;
- Verwenden eines Urethan-Acryl-Anstrichmittels; und
- Auftragen dieses Anstrichmittels auf dem Lack (3) des Oberflächenbelags.

11. Verfahren zur Oberflächenverzierung nach Anspruch 10, wobei der Oberflächenbelag ein mehrlagiges Produkt ist, das eine geschäumte oder kompakte oder textile Trägerschicht (1) sowie eine Deckschicht (2) auf Basis von PVC umfasst.

12. Verfahren nach einem der Ansprüche 10 bis 12, wobei der Oberflächenbelag in Form von Platten oder Rollen vorliegt.

13. Verfahren nach einem der Ansprüche 10 bis 13, wobei die Platten oder Rollen stumpf aneinanderstoßend auf der zu verzierenden Oberfläche angeordnet werden und mit Kaltverschweißen verbunden werden.

14. Verfahren nach einem der Ansprüche 10 bis 14, wobei der Oberflächenbelag mithilfe des Urethan-Acryl-Anstrichmittels unter Verwendung von mindestens einer Schablone verziert wird.

## Claims

1. Surface decoration kit comprising a PVC-based surface coating to be installed on the surface to be decorated, **characterized in that**:
said PVC-based coating is a paintable surface coating, the surface of which to be painted is covered with a varnish (3) obtained by UV crosslinking of a UV-crosslinkable polyurethane polymer; and
the kit additionally comprises a container containing a acrylic urethane-based paint to be applied to the varnish (3) of the surface to be painted, after having laid the surface coating on the surface to be decorated.

2. Decoration kit according to Claim 1, in which the surface coating is a multilayer product comprising a foam or compact or textile support layer (1) and a PVC-based upper layer (2).

3. Decoration kit according to either one of the preceding claims, in which the surface coating is in the form of tiles or at least one roll.

4. Decoration kit according to any one of the preceding claims, additionally comprising means for applying the paint to the surface coating.

5. Decoration kit according to any one of the preceding claims, additionally comprising means for installing the surface coating and/or means for welding said surface coating.

6. Decoration kit according to any one of the preceding claims, additionally comprising at least one stencil and/or one stencil film.

7. Decoration kit according to any one of the preceding claims, additionally comprising instructions.

8. Surface decoration comprising a PVC-based surface coating installed on the surface to be decorated, **characterized in that** said surface coating is a paintable coating, the surface of which to be painted is covered with a varnish (3) obtained by UV crosslinking of a UV-crosslinkable polyurethane polymer, and **in that** at least one acrylic urethane-based paint has been applied to said varnish (3) after having installed the PVC-based surface coating on the surface to be decorated.

9. Surface coating according to Claim 8, in which said surface coating is a multilayer product comprising a foam or compact or textile support layer (1) and a PVC-based upper layer (2).

10. Method for decorating a surface, **characterized by** the following steps:
- taking a PVC-based paintable surface coating, the surface of which to be painted is covered with a varnish (3) obtained by UV crosslinking of a UV-crosslinkable polyurethane polymer;
- installing said coating on the surface to be decorated;
- taking an acrylic-urethane-based paint; and
- applying said paint to said varnish (3) of the surface coating.

11. Surface decoration method according to Claim 10, in which said surface coating is a multilayer product comprising a foam or compact or textile support layer (1) and a PVC-based upper layer (2).

12. Method according to any one of Claims 10 to 12, in which the surface coating is in the form of tiles or rolls.

13. Method according to any one of Claims 10 to 13, in which the tiles or rolls are positioned edge to edge on the surface to be decorated and are joined by a cold weld.

14. Method according to any one of Claims 10 to 14, in which the surface coating is decorated with the aid of the acrylic urethane-based paint, by using at least one stencil.
